# FASCICULE DE BREVET EUROPEEN

(11) **EP 0 613 396 B1**
(45) Date de publication et mention de la délivrance du brevet: **02.07.1997**
(21) Numéro de dépôt: 93919443.7
(22) Date de dépôt: 13.09.1993
(51) Int. Cl.: B01D 53/32, C25B 1/02

(54) **CELLULE ELECTROCHIMIQUE ET SON UTILISATION POUR LA SEPARATION ET L'EXTRACTION ELECTROCHIMIQUE DE L'OXYGENE**
ELEKTROCHEMISCHE ZELLE UND IHRE VERWENDUNG ZUR ELEKTROCHEMISCHEN TRENNUNGODER EXTRAKTION VON SAUERSTOFF.
ELECTROCHEMICAL CELL AND USE THEREOF IN THE ELECTROCHEMICAL SEPARATION OR EXTRACTION OF OXYGEN

(30) Priorité: 14.09.1992 FR 9210904
(43) Date de publication de la demande: 07.09.1994
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR); UNIVERSITE DES SCIENCES ET TECHNOLOGIES DE LILLE, 59655 Villeneuve d'Ascq Cedex (FR); ECOLE NATIONALE SUPERIEURE DE CHIMIE DE LILLE, F-59655 Villeneuve D'Ascq (FR)
(72) Inventeur: MAIRESSE, Gaetan, F-59655 Villeneuve-d'Ascq (FR); BOIVIN, Jean-Claude, F-59655 Villeneuve-d'Ascq (FR); LAGRANGE, Gilles, F-91470 Forges-les-Bains (FR); COCOLIOS, Panayotis, F-91470 Limours (FR)
(74) Mandataire: Caen, Thierry Alain
(86) Numéro de dépôt international: FR9300872
(87) Numéro de publication internationale: WO9406545

(56) Documents cités:
- EP-A- 0 239 771
- EP-A- 0 438 902
- EP-A- 0 443 259
- WO-A-91/01274
- WO-A-91/06692
- US-A- 4 725 346

## Description

La présente invention a pour objet une cellule électrochimique constituée d'un électrolyte solide d'une anode et d'une cathode ainsi que l'utilisation de cette cellule électrochimique en vue de la séparation électrochimique des gaz d'un mélange d'au moins un gaz et d'oxygène ou en vue de l'extraction de l'oxygène d'une molécule contenant de l'oxygène.

On sait que des électrolytes solides, constitués classiquement, par exemple, de compositions dérivées des oxydes de zirconium, d'yttrium, de bismuth ou de cérium, contenant ou non des dopants comme l'ytterbium ou le calcium, peuvent être utilisés comme conducteurs d'ions O²⁻, lorsqu'ils sont soumis à un champ électrique et/ou une différence de pression partielle en oxygène. Ces électrolytes solides possèdent habituellement une même structure de base, dérivée de la structure dite de type fluorine possédant des lacunes oxygénées. Ils autorisent une conduction d'ions O²⁻ qui est essentiellement tridimensionnelle.

Par ailleurs des électrolytes solides conducteurs par anions O²⁻ont été décrits dans la demande de brevet WO-A-91/01274. Ces électrolytes sont constitués d'une composition dérivée de Bi₄V₂O₁₁ et dont l'un au moins des éléments constitutifs est substitué par un ou plusieurs éléments substituants choisi de sorte que le type structural de la phase gamma de Bi₄V₂O₁₁ est maintenu ainsi que l'équilibre des charges. Ce type d'électrolyte solide présente une structure lamellaire dans laquelle le mécanisme de conduction des ions O²⁻ est essentiellement bidimensionnel.
Ainsi les électrolytes solides constitués d'une composition dérivée de Bi₄V₂O₁₁, se distinguent des électrolytes solides classiques, par leur composition chimique, leur structure cristalline et leur mode de conduction des ions O²⁻.

Des électrolytes solides constitués de compositions dérivés de Bi₄V₂O₁₁ possèdent la propriété remarquable de permettre une conductivité anionique de 10⁻³Ω⁻¹.cm⁻¹ vers 200°C, ce qui est de l'ordre de cent fois supérieure aux performances des matériaux actuellement sur le marché. De tels matériaux classiques sont même inopérants à des températures inférieures à 300°C. Pour atteindre une conductivité anionique de l'ordre de 10⁻³Ω⁻¹.cm⁻¹, il faut les porter à des températures supérieures à environ 600°C.

Il a été cependant constaté par les demanderesses que des électrodes classiques, essentiellement à base d'argent ou d'or, déposée par exemple sous forme d'une laque sur l'électrolyte solide, conduisent, lorsqu'elles sont associées à un électrolyte solide constitué d'une composition dérivée de Bi₄V₂O₁₁, à une désactivation rapide de la cellule électrochimique. Une telle désactivation ne se produit pas lorsque l'électrolyte solide est constituée, par exemple, d'une zircone stabilisée classique. Bien entendu, une telle désactivation de la cellule électrochimique n'est pas compatible avec une exploitation à l'échelle industrielle. Sans se lier à une explication théorique, les demanderesses ont pu attribuer la désactivation à une réaction chimique entre l'un ou plusieurs des éléments constitutifs de l'électrolyte dérivé de Bi₄V₂O₁₁ et de l'électrode à base d'argent. Dans le cas de l'or, sa diffusion dans le matériau électrolytique conduit souvent à une augmentation très forte de la résistivité en surface, préjudiciable à une bonne répartition de la densité de courant, pouvant entraîner des phénomènes de cratérisation qui conduisent à la détérioration de la cellule.

Les demanderesses ont poursuivi leurs recherches et ont élaboré une cellule électrochimique dont l'électrolyte solide est constituée d'une composition dérivée de Bi₄V₂O₁₁ et ne se désactivant pas rapidement. Un objet de la présente invention consiste alors en une cellule électrochimique constituée d'un tel électrolyte solide, d'une anode et d'une cathode permettant une utilisation de longue durée, même à l'échelle industrielle, notamment en vue de la séparation électrochimique de l'oxygène d'un mélange de gaz contenant de l'oxygène ou en vue de l'extraction électrochimique de l'oxygène d'une molécule contenant de l'oxygène.

La présente invention concerne alors un dispositif constitué d'un électrolyte solide conducteur d'anions O²⁻ en contact avec une anode et une cathode de composition identique ou différente, ledit électrolyte solide étant constitué d'une composition dérivée de Bi₄V₂O₁₁ dont l'un au moins des éléments cationiques constitutifs est substitué par au moins un élément de substitution choisi de sorte que le type structural de la phase gamma de Bi₄V₂O₁₁ est maintenu ainsi que l'équilibre des charges, ledit dispositif étant caractérisé en ce que l'une au moins de l'anode ou de la cathode comprend deux parties, une première partie étant en un matériau conducteur mixte électronique et ionique en contact avec l'électrolyte solide, la deuxième partie étant en un matériau conducteur électronique et étant superposée à la première partie, ledit matériau conducteur électronique étant différent de l'élément substituant.

De préférence l'anode et la cathode comprennent chacune lesdites deux parties.

Ledit matériau conducteur mixte électronique et ionique peut être une céramique telles les manganites, cobaltites ou ferrites de lanthane dopées au strontium, au cérium ou au thorium, les composés de formule (I) :

YBa₂Cu₃O₇₋ₓ (I)

où x est compris entre 0 et 1,
les oxydes de bismuth ou les oxydes de cérium dopés par un ou deux cations, les oxydes de vanadium et strontium, les oxydes de vanadium et plomb, les oxydes de calcium et titane de formule (II) :

CaTi_{1-x'}M¹_{x'}O₃₋ₜ (II)

où M¹ est un élément de transition et x' et t ont des valeurs limites qui sont fonction de la nature de M¹.

De préférence le matériau conducteur mixte électronique et ionique est une manganite de lanthane dopée au strontium (LSM), de formule (III)

La_{1-x''}Sr_{x''}MnO₃ (III)

où x'' est strictement compris entre 0 et 1.

Le matériau conducteur électronique peut consister en un élément à l'état métallique, en un alliage comportant au moins un élément à l'état métallique ou en un matériau comportant au moins un élément à l'état cationique.

De préférence, le matériau comportant au moins un élément à l'état cationique est un oxyde de un ou plusieurs éléments à l'état cationique, et plus préférentiellement, un oxyde d'un seul élément à l'état cationique.

De préférence le matériau conducteur électronique est un matériau essentiellement ou uniquement conducteur électronique.
L'élément constitutif du matériau conducteur électronique peut être avantageusement un métal de transition, tels les lanthanides et les actinides comme le lanthane, le cérium, l'ytterbium ou le niobium ou un métal des groupes III_{b}, IV_{b}, V_{b}, VI_{b} ou VII_{b} de la classification périodique.

De manière plus avantageuse encore ledit métal est choisi parmi le fer, le cobalt, le nickel, le cuivre, le zinc et l'or.
Habituellement, l'électrolyte solide est constitué d'une composition dérivée de Bi₄V₂O₁₁ répondant à la formule (IV) :

(Bi_{2-w} M_{w}O₂) (V_{1-y} M'_{y} O_{z}) (IV)

dans laquelle :
- M représente un ou plusieurs éléments de substitution de Bi, choisi(s) parmi ceux ayant un nombre d'oxydation inférieur ou égal à 3,
- M' représente un ou plusieurs éléments de substitution de V choisi(s) parmi ceux ayant un nombre d'oxydation inférieur, égal ou supérieur à 5, les valeurs limites de w, y et donc z étant fonction de la nature des éléments substituants M et M',

Une famille particulièrement préférée de composition dérivée de Bi₄V₂O₁₁ selon l'invention consiste en des compositions dans lesquelles seul l'atome de vanadium est partiellement substitué par un ou plusieurs éléments. Ces compositions répondent à la formule (V) :

(Bi₂O₂) (V_{1-y} M'_{y} O_{z}) (V)

dans laquelle M' est tel que défini ci-dessus, y étant non nul.
M' est avantageusement sélectionné parmi les métaux alcalins, alcalino-terreux, les métaux de transition, notamment les métaux des groupes III à V de la classification périodique et les terres rares.

De préférence M' est choisi parmi le zinc, le cuivre, le nickel, le cobalt, le fer, le manganese et le cadmium.

L'électrolyte solide peut être aussi constituté d'une composition dérivée de Bi₄V₂O₁₁ où seul l'atome de bismuth est substitué partiellement par un ou plusieurs éléments. Une telle composition répond à la formule (VI) :

(Bi_{2-w} M_{w}O₂) (VO_{z}⁾ (VI)

dans laquelle M et z sont tels que définis ci-dessus et w étant non nul. De préférence, M est une une terre rare, tel le lanthane.

L'électrolyte solide peut encore être constitué d'une composition dérivée de Bi₄V₂O₁₁ de formule (IV) tel que défini ci-dessus, dans laquelle w et y sont non nuls.

Les compositions dérivées de Bi₄V₂O₁₁ telles que décrites ci-dessus peuvent être préparés selon le procédé décrit dans la demande de brevet WO 91/01274.

Ces compositions se présentant généralement sous forme de poudre sont avantageusement mises en forme pour être utilisées en tant qu'électrolyte solide dans le dispositif selon l'invention.

Ainsi l'électrolyte solide peut se présenter sous la forme d'un tube supporté ou non par un support poreux comme un tube en une céramique telle que l'alumine, un métal poreux ou une manganite de lanthane dopée au strontium (LSM), d'un disque, d'une plaque ou d'une multicouche alvéolée. L'épaisseur de l'électrolyte solide peut être comprise entre 0,001 et 2 mm et de préférence comprise entre 0,01 et 1 mm. L'anode et la cathode sont généralement disposées sur deux faces opposées de l'électrolyte solide.

La mise en contact de l'anode et/ou la cathode sel on l'invention avec l'électrolyte solide peut être réalisée selon différentes techniques. La première partie en un matériau conducteur mixte électronique et ionique, notamment lorsqu'elle se présente comme une sous-couche, peut être déposée à la surface de l'électrolyte par des méthodes tels que l'application d'une couche de peinture au moyen d'un pinceau, la sérigraphie, le dépôt au trempé, la projection par aérosol, la projection par aérosol à plasma, le dépôt chimique à l'état de vapeur (CVD), le dépôt sous vide (PVD) comprenant l'évaporation sous vide et le sputtering, le dépôt chimique en solution ne mettant pas en oeuvre du courant électrique, le dépôt chimique en solution sous l'influence d'une différence de potentiel. Selon la méthode choisie, ledit matériau peut se présenter en mélange avec différents excipients tels des solvants ou des liants choisis de sorte à être facilement éliminés de la surface de l'électrolyte solide.

Ainsi, si la méthode choisie est l'application d'une peinture, ledit matériau constitutif de la sous-couche est mélangé à des solvants et des liants organiques qui peuvent être éliminés par un traitement thermique approprié.

Selon la méthode choisie, ledit matériau suite à son dépôt sur l'électrolyte, peut être fritté à des températures pouvant être comprises entre 20 et 850° C.

La deuxième partie de l'anode et/ou de la cathode peut être superposée à la première partie en mettant en oeuvre une des méthodes décrites ci-dessus. Cette méthode peut être identique ou différente de celle mise en oeuvre pour l'application de la première partie.

Comme indiqué pour ce qui concerne la première partie et selon la méthode de dépôt de la deuxième partie, celle-ci peut être subséquemmment frittée à des températures pouvant être comprises entre 20 et 850° C.

L'invention concerne également l'utilisation de la cellule électrochimique décrite ci-dessus pour l'élaboration de jauges à oxygène, de capteurs ampérométriques, de piles à combustibles, d'installations pour la séparation électrochimique de gaz, notamment l'oxygène, d'un mélange de gaz contenant de l'oxygène ou d'installation pour l'extraction électrochimique de l'oxygène d'une molécule contenant de l'oxygène.

A titre d'installation pour la séparation électrochimique d'oxygène d'un mélange de gaz contenant de l'oxygène, dans laquelle la cellule électrochimique de l'invention peut être mise en oeuvre, on peut citer celle décrite dans Solid State Ionics 28-30 (1988), 524 - 528 par Dumelié M. et al.

Dans ce type d'installation, le dispositif selon l'invention permet notamment de séparer l'oxygène de l'air, ou d'un autre mélange d'azote et d'oxygène ou d'un mélange d'argon et d'oxygène.

A titre d'installations pour l'extraction électrochimique de l'oxygène d'une molécule contenant de l'oxygène, on peut citer celles décrites dans les demandes de brevet japonais 85/172360 et 85/172359.

Dans ce type d'installation, la cellule électrochimique selon l'invention permet d'extraire l'oxygène du monoxyde de carbone ou du dioxyde de carbone. Des installations du même type permettent l'utilisation de la cellule électrochimique selon l'invention pour extraire l'oxygène de l'eau, des NOx ou SOx.

Les exemples qui suivent ont pour but d'illustrer la présente invention.

### Exemple 1 (selon l'invention)

On élabore une installation pour la séparation électrochimique de l'oxygène de l'air de la façon suivante :
1) On prépare un électrolyte solide en forme de disque à partir d'une poudre d'une composition dérivée de Bi₄V₂0₁₁ de formule Bi₂V_{0,9} Cu_{0,1} O_{5,35} (Bi Cu VOx). Pour ce faire, la poudre est broyée de sorte que le diamètre moyen des grains soit de 6 microns environ, la granulométrie variant de 0,3 à 15 microns. Le disque est obtenu par pressage en appliquant sur la poudre broyée une force de l'ordre de 6 tonnes. Il présente une surface de 2 cm² et une épaisseur de 1,2 mm.
2) Le disque est alors fritté pendant 5 heures dans une atmosphère d'air de sorte à obtenir un produit résistant mécaniquement et imperméable aux gaz.
3) Sur une partie de chacune des surfaces des disques on dépose à l'aide d'un pinceau une sous-couche d'une laque à base d'un manganate de lanthane dopé au strontium, de formule La_{0,5} Sr_{0,5} Mn O₃ (LSM).
   On séche le disque à 150°C afin d'éliminer les solvants et les liants de la laque, puis on fritte les couches de LSM à 850°C pendant environ 6 heures dans une atmosphère d'air.
4) Sur chacune des sous-couches de LSM, on applique au pinceau une encre à base d'or. On sèche pendant une heure à 150°C et on élimine les solvants et liants organiques en portant à la température de 350°C pendant une heure encore. Ensuite on cuit le disque à 600°C pendant une minute environ.
5) Le disque d'électrolyte solide pourvu sur chacune de ses surfaces d'une électrode forme une cellule qui est déposée sur la tranche d'un tube conducteur en inox. Afin de maintenir de manière stable le disque sur la tranche du tube en inox, on applique un ciment colle imperméable aux gaz et isolant électrique sur la tranche du disque et sur une partie externe dudit tube. Le contact électrique côté anodique est constitué par le tube en inox et le contact électrique côté cathodique est assuré par une tige métallique externe dont l'une des extrémités est au contact de l'or superposant le LSM.
   En fonctionnement pour la séparation électrochimique de l'oxygène de l'air, le côté cathodique du disque est mis en contact avec de l'air. L'oxygène pur est récupéré dans le tube en inox, du côté anodique de la cellule.
   Le tube en inox et la tige métallique sont reliés à un générateur. On soumet la cellule à une température de 300°C. L'intensité appliquée aux bornes de la cellule est de 0,3 A, ce qui correspond à un potentiel de l'ordre de 9,5 à 12,4 volts sur la durée de l'expérience. La cellule a donc fonctionné sous une densité de courant de 1493 A/m².
   La production d'oxygène pur a été de 0,25 ml/min ramené à l'unité de surface (1cm²) pendant une durée de 8 jours.

### Exemple 2 (comparatif)

On prépare une installation selon les étapes 1 à 5 de l'exemple 1, en omettant cependant l'étape 4). L'anode et la cathode de la cellule sont donc uniquement constituées d'une couche de LSM.

En vue de la production d'oxygène pur à partir d'air, on soumet l'installation à une température de 480°C et on applique une intensité de 0,3 A aux bornes de la cellule. Cette intensité correspond à un potentiel de 1 à 6 volts sur la durée de l'expérience. Cette cellule a donc fonctionné sous une densité de courant de 1493 A/m².

La production d'oxygène pur dans ces conditions fut de 0,01 ml/min ramené à l'unité de surface (1 cm²) pendant une durée de 20 minutes, après quoi toute production d'oxygène avait cessé.

### Exemple 3 (comparatif)

On procède à l'élaboration d'une installation similaire à celle de l'exemple 1 mais où le disque présente une surface de 2,2 cm² et la cathode et l'anode sont constituées d'un couche d'or au contact direct des surfaces du disque d'électrolyte solide.

En vue de la production d'oxygène pur à partir d'air, on soumet la cellule à une température de 286°C. L'intensité appliquée aux bornes de la cellule est de 0,3 A. Cette intensité correspond à un potentiel de 14 volts. Cette cellule a donc fonctionné sous une densité de courant de 1493 A/m₂. La production d'oxygène pur dans ces conditions fut de 0,21 ml/min. ramené à l'unité de surface (1 cm²) pendant une durée de 345 min., après quoi toute production d'oxygène avait cessé et l'or avait disparu de la surface de l'électrolyte solide.

### Exemple 4 (comparatif)

On élabore une installation similaire à celle de l'exemple 3, mais où le disque de la cellule présente une surface de 2,27 cm² , une épaisseur de 1,1 mm, et où l'anode et la cathode sont en argent au lieu d'être en or. L'argent est également déposée sur l'électrolyte par application au pinceau d'une encre, à base d'argent cette fois.

En vue de la production d'oxygène pur à partir d'air, on soumet la cellule à une température de 420°C.

L'intensité appliquée aux bornes de la cellule est de 0,3 A. Cette intensité correspond à un potentiel de 11 v. Cette cellule a donc fonctionné sous une densité de courant de 1322 A/m². La production d'oxygène pur dans ces conditions fut de 0,01 ml/mm ramené à l'unité de surface (1 cm²) pendant une durée de 10 min. Durant ce délai très court de fonctionnement, l'argent des électrodes a apparemment réagi avec l'électrolyte pour former un matériau d'aspect différent de celui de départ et inactif pour la séparation de l'oxygène de l'air.

## Revendications

1. Cellule électrochimique constituée d'un électrolyte solide conducteur d'anions O²⁻ en contact avec une anode et une cathode de composition identique ou différente, ledit électrolyte solide étant constitué d'une composition dérivée de Bi₄V₂O₁₁ dont l'un au moins des éléments cationiques constitutifs est substitué par au moins un élément substituant choisi de sorte que le type structural de la phase gamma de Bi₄V₂O₁₁ est maintenu ainsi que l'équilibre des charges, ladite cellule électrochimique étant caractérisée en ce que l'une au moins de l'anode ou de la cathode comprend deux parties, une première partie étant en un matériau conducteur mixte électronique et ionique en contact avec l'électrolyte solide, la deuxième partie étant en un matériau conducteur électronique et étant superposée à la première partie, ledit matériau conducteur électronique étant différent de l'élément substituant.

2. Cellule électrochimique selon la revendication 1 caractérisée en ce que ladite première partie forme une sous-couche recouverte d'une couche en ladite deuxième partie.

3. Cellule électrochimique selon l'une des revendications 1 et 2 caractérisée en ce que le matériau conducteur mixte électronique et ionique est une céramique telles les manganites, cobaltites ou ferrites de lanthane dopées au strontium, au cérium ou au thorium, les composés de formule (I) :
YBa₂Cu₃O₇₋ₓ (I)
où x est compris entre 0 et 1,
les oxydes de bismuth ou les oxydes de cérium dopés par un ou deux cations, les oxydes de vanadium et strontium, les oxydes de vanadium et plomb, les oxydes de calcium et titane de formule (VI) :
CaTi_{1-x'}M¹_{x'}O₃₋ₜ (II)
où M¹ est un métal de transition et x' et t ont des valeurs limites qui sont fonction de la nature de M₁.

4. Cellule électrochimique selon la revendication 3 caractérisé en ce que ladite céramique est une manganite de lanthane dopée au strontium de formule (III) :
La_{1-x''} Sr_{x''}MnO₃ (III)
où x'' est strictement comprise entre 0 et 1.

5. Cellule électrochimique selon l'une des revendications précédentes caractérisé en ce que le matériau conducteur électronique consiste en un élément à l'état métallique, en un alliage comportant au moins un élément à l'état métallique ou en un matériau comportant au moins un élément à l'état cationique.

6. Cellule électrochimique selon la revendication 5 caractérisée en ce le matériau conducteur électronique est un oxyde d'au moins un élément à l'état cationique, de préférence un oxyde d'un seul élément à l'état cationique.

7. Cellule électrochimique selon l'une des revendications 5 et 6 caractérisée en ce que ledit élément est un métal de transition tels que le fer, le cobalt, le nickel, le cuivre, le zinc ou l'or.

8. Cellule électrochimique selon l'une des revendications précédentes caractérisée en ce que la composition dérivée de Bi₄V₂O₁₁ répond à la formule (IV) :
(Bi_{2-w} Mw O₂) (V_{1-y} M'_{y} O_{z}) (IV)
dans laquelle :
- M représente un ou plusieurs éléments de substitution de Bi, choisi(s) parmi ceux ayant un nombre d'oxydation inférieur ou égal à 3,
- M' représente un ou plusieurs éléments de substitution de V choisi(s) parmi ceux ayant un nombre d'oxydation inférieur, égal ou supérieur à 5, les valeurs limites de w, y et donc z étant fonction de la nature des éléments substituants M et M',

9. Cellule électrochimique selon la revendication 8 caractérisée en ce que la composition dérivée de Bi₄V₂O₁₁ répond à la formule (V)
(Bi₂O₂) (V_{1-y} M'_{y} O_{z}) (V)
dans laquelle :
M' est tel que défini dans la revendication 8, y étant non nul.

10. Cellule électrochimique selon la revendication 9 caractérisée en ce que M' est choisi parmi les métaux alcalins, alcalino-terreux et les métaux de transition tels les métaux des groupes III à V de la classification périodique et les terres rares.

11. Cellule électrochimique selon la revendication 10 caractérisée en ce que la composition dérivée de Bi₄V₂O₁₁ répond à la formule (VI)
(Bi_{2-w} M_{w} O₂) (VO_{z}) (VI)
dans laquelle M et z étant tel que définis dans la revendication 8, w étant non nul.

12. Cellule électrochimique selon la revendication 11 caractérisée en ce que M est choisi parmi les terres rares tel le lanthane.

13. Cellule électrochimique selon la revendication 8 caractérisée en ce que w et y dans la formule IV, sont non nuls.

14. Utilisation d'une cellule électrochimique selon l'une des revendications 1 à 13 pour la séparation électrochimique de l'oxygène contenu dans un mélange gazeux contenant de l'oxygène, tels un mélange d'azote et d'oxygène ou un mélange d'argon et d'oxygène.

15. Utilisation d'une cellule électrochimique selon la revendication 14 pour la séparation électrochimique de l'oxygène de l'air.

16. Utilisation d'une cellule électrochimique selon l'une des revendications 1 à 13 pour l'extraction électrochimique de l'oxygène d'une molécule contenant de l'oxygène, tels l'eau, le dioxyde de carbone, le monoxyde de carbone, les NOₓ ou les SOₓ.

## Claims

1. Electrochemical cell consisting of a solid electrolyte conducting O²⁻ anions in contact with an anode and a cathode having an identical or a different composition, the said solid electrolyte consisting of a compound derived from Bi₄V₂O₁₁ of which one at least of the constituent cationic elements is substituted by at least one substituent element selected so that the structural type of the gamma phase of Bi₄V₂O₁₁ is maintained as well as the charge equilibrium, the said electrochemical cell being characterized in that one at least of the anode or cathode comprises two parts, a first part being made of a mixed electron and ion conducting material in contact with the solid electrolyte, the second part being made of an electron conducting material and being superimposed on the first part, the said electron conducting material being different from the substituent element.

2. Electrochemical cell according to claim 1, characterized in that the said first part forms a sub-layer covered by a layer consisting of the said second part.

3. Electrochemical cell according to either of claims 1 or 2, characterized in that the mixed electron and ion conducting material is a ceramic such as the manganites, cobaltites or ferrites of lanthanum doped with strontium, cerium or thorium, compounds having the formula (I) :
YBa₂Cu₃O₇₋ₓ (I)
where x is between 0 and 1,
the oxides of bismuth or the oxides of cerium doped with one or two cations, the oxides of vanadium and strontium, the oxides of vanadium and lead, the oxides of calcium and titanium having the formula (II) :
CaTi_{1-x'}M¹_{x'}O₃₋ₜ (II)
where M¹ is a transition metal and x' and t have limit values which depend on the nature of M¹.

4. Electrochemical cell according to claim 3, characterized in that the said ceramic is a manganite of lanthanum doped with strontium having the formula (III) :
La_{1-x''}Sr_{x''}MnO₃ (III)
where x'' lies strictly between 0 and 1.

5. Electrochemical cell according to one of the preceding claims, characterized in that the electron conducting material consists of an element in the metallic state, an alloy comprising at least one element in the metallic state or a material comprising at least one element in the cationic state.

6. Electrochemical cell according to claim 5, characterized in that the electron conducting material is an oxide of at least one element in the cationic state, preferably an oxide of a single element in the cationic state.

7. Electrochemical cell according to either of claims 5 or 6, characterized in that the said element is a transition metal such as iron, cobalt, nickel, copper, zinc or gold.

8. Electrochemical cell according to one of the preceding claims, characterized in that the composition derived from Bi₄V₂O₁₁ has the formula (IV) :
(Bi_{2-w}M_{w}O₂) (V_{1-y}M'_{y}O_{z}) (IV)
in which :
- M represents one or more elements substituting Bi, selected from those having an oxidation number less than or equal to 3,
- M' represents one or more elements substituting V, selected from those having an oxidation number less than, equal to or greater than 5, the limit values of w, y and hence z depending on the nature of the substituting elements M and M'.

9. Electrochemical cell according to claim 8, characterized in that the composition derived from Bi₄V₂O₁₁ has the formula (V) :
(Bi₂O₂) (V_{1-y}M'_{y}O_{z}) (V)
in which :
M' is as defined in claim 8, y not being zero.

10. Electrochemical cell according to claim 9, characterized in that M' is selected from the alkali metals, the alkaline earth metals and the transition metals such as the metals of groups III to V of the periodic classification and the rare earths.

11. Electrochemical cell according to claim 10, characterized in that the composition derived from Bi₄V₂O₁₁ has the formula (VI) :
(Bi_{2-w}M_{w}O₂) (VO_{z}) (VI)
in which M and z are as defined in claim 8, w not being zero.

12. Electrochemical cell according to claim 11, characterized in that the M is selected from the rare earths such as lanthanum.

13. Electrochemical cell according to claim 8, characterized in that w and y in formula IV are not zero.

14. Use of an electrochemical cell according to one of claims 1 to 13 for the electrochemical separation of oxygen contained in a gaseous mixture containing oxygen, such as mixture of nitrogen and oxygen or a mixture of argon and oxygen.

15. Use of an electrochemical cell according to claim 14 for the electrochemical separation of oxygen from air.

16. Use of an electrochemical cell according to one of claims 1 to 13 for the electrochemical separation of oxygen from a molecule containing oxygen, such as water, carbon dioxide, carbon monoxide, NOₓ or SOₓ.

## Patentansprüche

1. Elektrochemische Zelle, bestehend aus einem O²⁻-Anionen leitenden Festkörperelektrolyt in Kontakt mit einer Anode oder Kathode gleicher oder unterschiedlicher Zusammensetzung, wobei der Festkörperelektrolyt eine von Bi₄V₂O₁₁ abgeleitete Verbindung ist, bei dem mindestens eines der wesentlichen Kationen durch mindestens ein Austauschelement ersetzt wird, das so gewählt ist, daß der Strukturtyp der Gammaphase von Bi₄V₂O₁₁ wie auch die Ladungsbilanz erhalten bleibt, wobei diese elektrochemische Zelle dadurch gekennzeichnet ist, daß zumindest eine der Elektroden (Anode oder Kathode) zwei Bereiche umfaßt, wobei der erste Bereich aus einem mit dem Festkörperelektrolyt in Kontakt stehendem, gemischt elektronen- und ionenleitenden Material besteht, und der zweite Bereich aus einem elektronenleitenden Material besteht und den ersten Bereich überdeckt, und sich das elektronenleitende Material von dem Austauschelement unterscheidet.

2. Elektrochemische Zelle nach Anspruch 1, dadurch gekennzeichnet, daß der erste Bereich eine von einer Schicht des zweiten Bereichs bedeckte Unterschicht bildet.

3. Elektrochemische Zelle nach einem der Ansprüche 1 und 2, dadurch gekennzeichnet, daß das gemischt elektronen- und ionenleitende Material eine Keramik wie die strontium-, cer- oder thoriumdotierten Lathanmanganite, -cobalite oder -ferrite, eine Keramik wie die Verbindungen der Formel (I)
YBa₂Cu₃O₇₋ₓ , (I)
wobei x zwischen 0 und 1 liegt,
oder eine Keramik wie die mit ein oder zwei Kationen dotierten Bismuthoxide oder Ceroxide, die Strontium- und Vanadiumoxide, die Vanadium- und Bleioxide, die Calcium- und Titanoxide mit der Formel (II)
CaTi_{1-x'}M¹_{x'}O₃₋ₜ (II)
ist, wobei M¹ ein Übergangsmetall ist und x' und t von der Natur von M¹ abhängige Grenzwerte haben.

4. Elektrochemische Zelle nach Anspruch 3, dadurch gekennzeichnet, daß die Keramik ein strontiumdotiertes Lanthanmanganit mit der Formel (III)
La_{1-x''}Sr_{x''}MnO₃ (III)
ist, wobei x'' zwischen 0 und 1 liegen muß.

5. Elektrochemische Zelle nach einem der vorangehenden Ansprüche, dadurch gekennzeichnet, daß das elektronenleitende Material aus einem Element im metallischen Zustand, aus einer Legierung mit mindestens einem Element im metallischen Zustand oder aus einem zumindest ein Kation enthaltenden Material besteht.

6. Elektrochemische Zelle nach Anspruch 5, dadurch gekennzeichnet, daß das elektronenleitende Material ein Oxid mindestens eines Kations, vorzugsweise ein Oxid eines einzigen Kations ist.

7. Elektrochemische Zelle nach einem der Ansprüche 5 und 6, dadurch gekennzeichnet, daß das besagte Element ein Übergangsmetall wie Eisen, Kobalt, Nickel, Kupfer, Zink oder Gold ist.

8. Elektrochemische Zelle nach einem der vorangehenden Ansprüche, dadurch gekennzeichnet, daß die von Bi₄V₂O₁₁ abgeleitete Verbindung der Formel (IV)
(Bi_{2-w}MwO₂)(V_{1-y}M'_{y}O_{z}) (IV)
entspricht, wobei
- M ein oder mehrere Austauschelemente von Bi mit einer Oxidationszahl kleiner oder gleich 3 darstellt,
- M' ein oder mehrere Austauschelemente von V mit eine Oxidationszahl kleiner, gleich oder größer 5 darstellt, und die Grenzwerte von w, y und folglich z abhängig von der Natur der Austauschelemente M und M' sind.

9. Elektrochemische Zelle nach Anspruch 8, dadurch gekennzeichnet, daß die von Bi₄V₂O₁₁ abgeleitete Verbindung der Formel (V)
(Bi₂O₂)(V_{1-y}M'_{y}O_{z}) (V)
entspricht, wobei M' wie in Anspruch 8 definiert ist und y ungleich Null ist.

10. Elektrochemische Zelle nach Anspruch 9, dadurch gekennzeichnet, daß M' aus den Alkalimetallen, den Erdalkalimetallen, den Übergangsmetallen aus den Gruppen III bis V des Periodensystems und den seltenen Erden gewählt ist.

11. Elektrochemische Zelle nach Anspruch 10, dadurch gekennzeichnet, daß die von Bi₄V₂O₁₁ abgeleitete Zusammensetzung der Formel (VI)
(Bi_{2-w}M_{w}O₂)(VO_{z}) (VI)
entspricht, wobei M und z wie in Anspruch 8 definiert sind und w ungleich Null ist.

12. Elektrochemische Zelle nach Anspruch 11, dadurch gekennzeichnet, daß M aus den Lanthaniden gewählt ist.

13. Elektrochemische Zelle nach Anspruch 8, dadurch gekennzeichnet, daß w und y in der Formel IV ungleich Null sind.

14. Gebrauch einer elektrochemischen Zelle nach einem der Ansprüche 1 bis 13 zur elektrochemischen Abscheidung von Sauerstoff aus einem Sauerstoff umfassenden gasförmigen Gemisch, wie z.B. einem Stickstoff/Sauerstoff-Gemisch oder einem Argon/Sauerstoff-Gemisch.

15. Gebrauch einer elektrochemischen Zelle nach Anspruch 14 zur elektochemischen Abscheidung des Sauerstoffs aus Luft.

16. Gebrauch einer elektrochemischen Zelle nach einem der Ansprüche 1 bis 13 zur elektrochemischen Extraktion von Sauerstoff aus einem Sauerstoff umfassenden Molekül, wie z.B. Wasser, Kohlendioxid, Kohlenmonoxid, Stickoxide oder Schwefeloxide.
